# EUROPÄISCHE PATENTSCHRIFT

(11) **EP 1 687 673 B1**
(45) Veröffentlichungstag und Bekanntmachung des Hinweises auf die Patenterteilung: **04.04.2007**
(21) Anmeldenummer: 04790690.4
(22) Anmeldetag: 20.10.2004
(51) Int. Cl.: G03B 17/56, F16M 11/10, F16M 11/06

(54) **STATIVKOPF MIT GEWICHTSAUSGLEICH**
CAMERA-SUPPORT HEAD WITH WEIGHT COMPENSATION
TETE DE TREPIED A EQUILIBRAGE DE POIDS

(30) Priorität: 13.11.2003 DE 10353004
(43) Veröffentlichungstag der Anmeldung: 09.08.2006
(73) Patentinhaber: Sachtler GmbH & Co. KG, 85386 Eching (DE)
(72) Erfinder: KISTNER, Bernhard, 80797 München (DE)
(74) Vertreter: HOFFMANN EITLE
(86) Internationale Anmeldenummer: PCT/EP2004/011882
(87) Internationale Veröffentlichungsnummer: WO 2005/047971

(56) Entgegenhaltungen:
- DE-A1- 3 026 379
- DE-A1- 3 908 682
- DE-B1- 2 717 772
- US-A- 5 413 295

## Beschreibung

### Technisches Gebiet

Die vorliegende Erfindung betrifft einen Stativkopf mit einer Einrichtung zum Ausgleichen eines bei einer Neigebewegung auftretenden Gewichtsmoments.

Solche Stativköpfe werden beispielsweise auf Kamerastativen oder -pedestalen verwendet. Kameras, die - beispielsweise aufgrund ihres Gewichts oder ihrer Größe oder aufgrund besonderer Anforderungen an eine ruhige Kameraführung - nicht von Hand gehalten werden können, ruhen auf einem solchen Kamerastativ oder einem Kamerapedestal. Dabei ist die Kamera auf einem Kamerastativkopf um eine horizontale Achse (Neigeachse) und eine vertikale Achse (Schwenkachse) drehbar gelagert, damit der Kameramann mit dem Kameraobjektiv bewegten Objekten folgen kann. (Im folgenden wird allein der Begriff "Kamerastativ" verwendet; die Ausführungen gelten jedoch ebenso für Kamerapedestale.) Beim Neigen der Kamera, d.h. beim Drehen des Kamerastativkopfes um seine Neigeachse, bewirkt der Abstand des Schwerpunkts der Kamera von dieser Neigeachse (Schwerpunktshöhe) zusammen mit der Gewichtskraft der Kamera ein vom Neigewinkel abhängiges Drehmoment um die Neigeachse.

Die Einrichtung für den Gewichtsausgleich soll durch die Kompensation dieses Neigemoments ein kraftfreies Neigen der Kamera ermöglichen. Dabei ist es erforderlich, dass der Gewichtsausgleich aufgrund des raschen Wechsels des Lastmoments beim Aufsetzen von verschiedenen Kameras - oder auch von anderen Einrichtungen wie Monitoren oder Kamerazubehör wie Telepromptern etc. - schnell und einfach an verschiedene Gewichte und verschiedene Schwerpunkthöhen anpassbar ist.

Außerdem soll der Gewichtsausgleich die Kamera in jeder Neigeposition direkt und unmittelbar ohne jede Nachbewegung halten, und zwar innerhalb eines Neigebereichs von mindestens ± 90°, um das gesamte räumliche Gesichtsfeld beim Neigen der Kamera abdecken zu können.

### Stand der Technik

Hinsichtlich des Gewichtsausgleichs ist es bekannt, das Neigemoment mit mehreren auf der Neigeachse hintereinander angeordneten Scheibentorsionsfedern aus Gummi zu kompensieren (vgl. z.B. DE 30 26 379). Der Gewichtsausgleich kann hier über das Zu- oder Abschalten von einzelnen Scheibentorsionsfedern angepasst werden.

Solche Scheibentorsionsfedern haben die Vorteile, dass sie ein gutes Verhältnis von Gewicht zu Leistung und Bauraum haben, d.h. eine gute Energiespeicherfähigkeit besitzen, ohne dabei ein großes Gewicht aufzuweisen oder viel Bauraum zu benötigen.

Liegt der Schwerpunkt des auf dem Stativkopf angebrachten Geräts, z.B. der Kamera, bei einem Neigewinkel von 0° genau vertikal über der Neigeachse, und wird die Kamera dann geneigt, so hat das Neigemoment eine sinusförmige Charakteristik. Die Kennlinie (Drehmoment über Drehwinkel) der bekannten Anordnung mit Scheibentorsionsfedern ist jedoch annähernd linear, so dass sie zwar in einem Neigebereich von 0° bis etwa 45° annähernd mit der sinusförmigen Charakteristik des Neigemoments übereinstimmt, bei Neigewinkeln > 45° jedoch immer stärker von dieser Charakteristik abweicht. Das Kompensationsmoment ist daher bei großen Neigewinkeln zu stark, so dass eine zurückgerichtete Nachbewegung der Kamera in Richtung der Ausgleichsstellung entsteht.

Aus der DE 27 17 772 B1 ist ebenfalls ein Stativkopf mit Gewichtsausgleich für eine neigbar befestigte Kamera mit sinusförmigem Verlauf des Rückstellmoments in bezug auf den Neigungswinkel bekannt, wobei die Anpassung an unterschiedliche Kameragewichte durch Austausch der Energiespeicher (Federn) erfolgen muß. Auch die DE 39 08 682 A1 offenbart einen Stativkopf mit Vorrichtung zum Ausgleichs des Gewichts bei einer Neigungsbewegung, wobei die Anpassung an das Kameragewicht durch Koppelung weiterer Energiespeicher (Federgehäuse) an die Vorhandenen erfolgt.

### Darstellung der Erfindung

Der vorliegenden Erfindung liegt die Aufgabe zugrunde, einen Stativkopf mit einer Einrichtung zum Ausgleichen eines bei einer Neigebewegung auftretenden Gewichtsmoments zu schaffen, die das entstehende Neigemoment exakter kompensiert, wobei der Stativkopf und insbesondere die Ausgleichseinrichtung gleichzeitig möglichst kompakt ausgestaltet sein soll.

Diese Aufgabe wird erfindungsgemäß durch einen Stativkopf mit den Merkmalen des Patentanspruchs 1 gelöst.

Demzufolge weist der Stativkopf einen Stator und einen bezüglich des Stators in einer Neigerichtung um eine Neigeachse herum drehbar gelagerten Rotor auf sowie eine Ausgleichseinrichtung zum Ausgleichen eines bei einer Neigebewegung des Rotors auftretenden Gewichtsmoments, die einen Energiespeicher aufweist, der auf den Rotor bei der Neigebewegung ein Rückstellmoment ausübt. Erfindungsgemäß weist die Ausgleichseinrichtung darüber hinaus eine Zusatzeinrichtung auf, die die Übertragung der Drehbewegung vom Rotor auf den Energiespeicher und so auch das mittels des Energiespeichers auf den Rotor ausgeübte Rückstellmoment beeinflusst.

Dadurch wird das Neigemoment deutlich exakter kompensiert als bei der herkömmlichen Anordnung, die lediglich den Rotor und zwischen diesem Rotor und dem Stator angeordnete Scheibentorsionsfedern als Energiespeicher aufweist, wobei die Drehung des Rotors unverändert auf den Energiespeicher übertragen wird.

In einer besonders vorteilhaften Ausgestaltung der Erfindung sind der Rotor und die Zusatzeinrichtung so miteinander und mit dem Energiespeicher gekoppelt, dass das mittels des Energiespeichers auf den Rotor ausgeübte Rückstellmoment durch die Zusatzeinrichtung so beeinflusst wird, dass sich das Rückstellmoment im Wesentlichen sinusförmig mit dem Neigungswinkel verändert.

Das vom Energiespeicher erzeugte Rückstellmoment hat dann einen Verlauf, der exakt dem Verlauf des Gewichtsmoments der Kamera beim Neigen um die Neigeachse entspricht: Wenn der Massenschwerpunkt der Kamera genau vertikal oberhalb der Neigeachse liegt, wird kein Rückstellmoment oder Kompensationsmoment von dem Energiespeicher erzeugt. Beim Neigen der Kamera aus der Ruhelage steigt das durch das Kameragewicht erzeugte Neigemoment mit wachsendem Neigewinkel sinusförmig an, und gleichzeitig wächst auch das von dem Energiespeicher erzeugte Kompensationsmoment sinusförmig an. In jedem Neigewinkel wird das Neigemoment also durch ein exakt gleich großes Gegenmoment kompensiert, so dass das auf dem Stativkopf befindliche Gerät, z.B. die Kamera, in jeder Neigelage im Gleichgewicht gehalten wird. Der Kameramann benötigt dann nur geringfügige Kräfte zum Neigen der Kamera in beide Richtungen, und die Kamera bleibt in jedem Neigewinkel selbstständig stehen, d.h. behält stets die Neigeposition bei.

Die Zusatzeinrichtung des erfindungsgemäßen Kamerastativkopfs ist dazu so ausgestaltet, dass sie die von dem Energiespeicher selbst erzeugte Kennlinie des Rückstellmoments (Rückstellmoment über Drehwinkel), die beispielsweise annähernd linear ist, so beeinflusst, dass die Kennlinie des von der Ausgleichsanordnung insgesamt erzeugten Rückstellmoments im gesamten Neigebereich von ± 90° - also insbesondere auch bei Neigewinkeln von > 45° - im Wesentlichen mit der sinusförmigen Charakteristik des Neigemoments übereinstimmt. Das Neigemoment wird daher auch bei großen Neigewinkeln so exakt kompensiert, dass keine zurückgerichtete Nachbewegung der Kamera in Richtung der Ausgleichsstellung entsteht.

Mit dem erfindungsgemäßen Stativkopf entspricht der Verlauf des Kompensationsmoments dem Verlauf des Neigemoments beim Neigen der Kamera daher im gesamten Neigebereich von mindestens ± 90°, so dass sich die Kamera bei großen Neigewinkeln ebenso kraftarm neigen lässt wie bei kleinen Neigewinkeln und auch bei großen Neigewinkeln in jeder gewünschten Stellung ohne Nachbewegung selbstständig stehen bleibt.

In einer vorteilhaften Weiterbildung der Erfindung kann die Ausgleichseinrichtung Mittel zum Übertragen der Drehbewegung des Rotors auf die Zusatzeinrichtung aufweisen. Dabei kann die Einrichtung zur Beeinflussung des Rückstellmoments insbesondere eine ebenfalls bezüglich des Stators um eine Achse drehbar gelagerte Welle aufweisen sowie Mittel zum Übertragen der Drehbewegung des Rotors auf die Welle, so dass bei der Neigebewegung das mittels des Energiespeichers auf den Rotor ausgeübte Rückstellmoment durch die Drehung der Welle um deren Achse beeinflusst wird.

Der Energiespeicher kann zumindest einen mit dem Stator, z.B. kraft- oder formschlüssig, verriegelbaren Außenring sowie zumindest einen dazu konzentrischen, auf der Einrichtung zur Beeinflussung des Rückstellmoments, ebenfalls z.B. kraft- oder formschlüssig, verriegelten Innenring und zumindest ein dazwischen angeordnetes Federelement aufweisen. Das zumindest eine Federelement kann eine Torsionsfeder sein, beispielsweise eine Spiralfeder, eine Anordnung aus gegensinnig gewickelten Spiralfedern oder eine Feder aus gummielastischem Material wie Gummi, Kautschuk, Kunststoff oder Verbundmaterialien. Durch Einspannen dieser Federelemente zwischen jeweils einem Innenring und einem Außenring entstehen Scheibentorsionsfedern.

Der Energiespeicher der Ausgleichseinrichtung kann in mehrere voneinander unabhängige Einheiten aufgeteilt sein - insbesondere mehrere voneinander unabhängige Scheibentorsionsfedern -, die wählbar einzeln oder in Kombination miteinander in Wirkverbindung zwischen dem Stator und der Einrichtung zur Beeinflussung des Rückstellmoments einschaltbar sind, und zwar je nach dem Gewicht des jeweils verwendeten Gerätes, d.h. z.B. einer Film- oder Fernsehkamera. Hierdurch ist die Möglichkeit gegeben, durch entsprechende Einstellung der Rückstellkraft der jeweiligen Energiespeicher in Verbindung mit den Verriegelungsmöglichkeiten dieser Energiespeicher das Rückstellmoment der Ausgleichseinrichtung über einen weiten Gewichtsbereich einstellen zu können.

So kann die Ausgleichseinrichtung exakt an Kameras mit beliebigem Gewicht und beliebiger Schwerpunkthöhe angepasst werden, wobei Kameralinsenkombinationen inklusive Zubehör ein Gewicht von bis zu 100 kg und eine Schwerpunkthöhe von bis zu 25 cm aufweisen können. Bei Telepromptern und weiterem Kamerazubehör, das ebenso auf den erfindungsgemäßen Kamerastativkopf montiert werden kann, mögen davon abweichende Gewichts- und Hebelverhältnisse vorliegen; auch das durch solche Aufbauten entstehende Gewichtsmoment kann von der erfindungsgemäßen Ausgleichseinrichtung für den Gewichtsausgleich kompensiert werden.

Zur Übertragen der Drehung des Rotors auf die Zusatzeinrichtung kann z.B. ein Untersetzungs- und/oder Übersetzungsgetriebe vorgesehen sein. In einer vorteilhaften Ausgestaltung ist ein Abwälzgetriebe vorhanden, das durch einen Abwälzbereich des Rotors sowie einen Abwälzbereich der Einrichtung zur Beeinflussung des Rückstellmoments gebildet ist.

Diese gewünschte sinusförmige Kennlinie des Rückstellmoments kann dann durch geeignete Gestaltung des Querschnitts derjenigen Bereiche der beiden Rotoren erzielt werden, die aufeinander ablaufen. Die optimalen Querschnittsgestalten können sich aus Berechnungen ergeben, die Fachleute vor dem Hintergrund der vorliegenden Lehren ausführen können.

Zum Übertragen der Drehung des Rotors auf die Einrichtung zur Beeinflussung des Rückstellmoments kann alternativ oder zusätzlich zumindest ein Band oder Riemen vorgesehen sein. Vorzugsweise sind zwei Bänder oder Riemen zum Übertragen der Drehung des Rotors auf die Einrichtung zur Beeinflussung des Rückstellmoments in jeweils einer Neigerichtung vorgesehen.

Die Verbindung der Bänder oder Riemen mit den beiden Rotoren erfolgt form- und/oder kraftschlüssig. Die Bänder oder Riemen können aus Stahl oder aus anderen geeigneten Materialien bestehen.

Schließlich kann der Stativkopf, um sanfte Neigebewegungen zu ermöglichen, darüber hinaus eine vom Gewichtsausgleich unabhängige, möglichst ebenfalls verstellbare Dämpfungseinrichtung aufweisen.

### Kurze Beschreibung der Zeichnungen

Im folgenden werden Ausführungsbeispiele der Erfindung unter Bezugnahme auf die beigefügten Zeichnungen näher beschrieben. Im einzelnen zeigt:
- Fig. 1: schematisch ein Kamerastativ mit einem Stativkopf sowie einer darauf angebrachten Kamera,
- Fig. 2: eine Ansicht eines erfindungsgemäßen Stativkopfs von der Seite,
- Fig. 3: eine Draufsicht auf den erfindungsgemäßen Stativkopf,
- Fig. 4: eine Schnittansicht entlang der Linie A-A in Fig. 3,
- Fig. 5: eine Schnittansicht entlang der Linie B-B in Fig. 4, und
- Fig. 6: eine Schnittansicht entlang der Linie C-C in Fig. 4.

### Ausführliche Beschreibung einer bevorzugten Ausführungsform

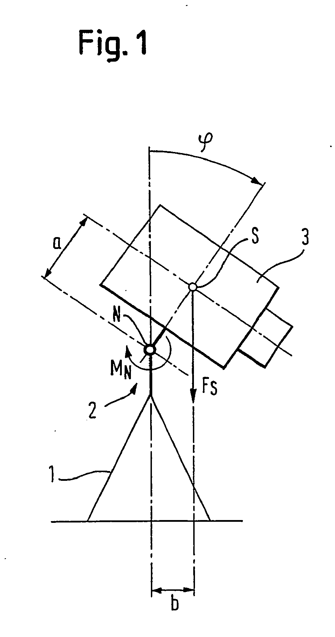

Fig. 1 zeigt schematisch ein Kamerastativ 1 mit einem Stativkopf 2 sowie einer darauf angebrachten Kamera 3. Die Kamera ist gegenüber ihrer Gleichgewichtslage, in der sich ihr Schwerpunkt S genau vertikal oberhalb der senkrecht zur Zeichenebene verlaufenden Neigeachse N befindet, um den Neigewinkel ϕ ausgelenkt. Aufgrund des Schwerpunktsabstands a des Schwerpunkts der Kamera von der Neigeachse N entsteht ein Hebelarm b = a sin ϕ, der zusammen mit der Gewichtskraft Fs der Kamera ein Neigemoment M um die Neigeachse N bewirkt. Mit wachsendem Winkel ϕ steigt das Neigemoment M = Fs a sin ϕ sinusförmig an.

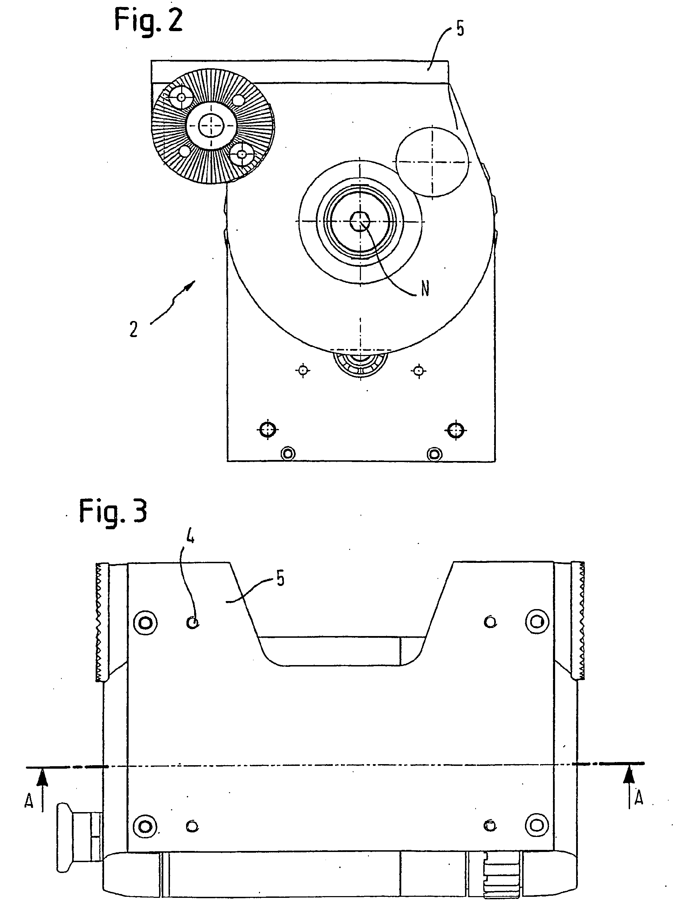

Die Fig. 2 bis 5 zeigen verschiedene Ansichten einer erfindungsgemäßen Ausführungsform eines Stativkopfs 2.

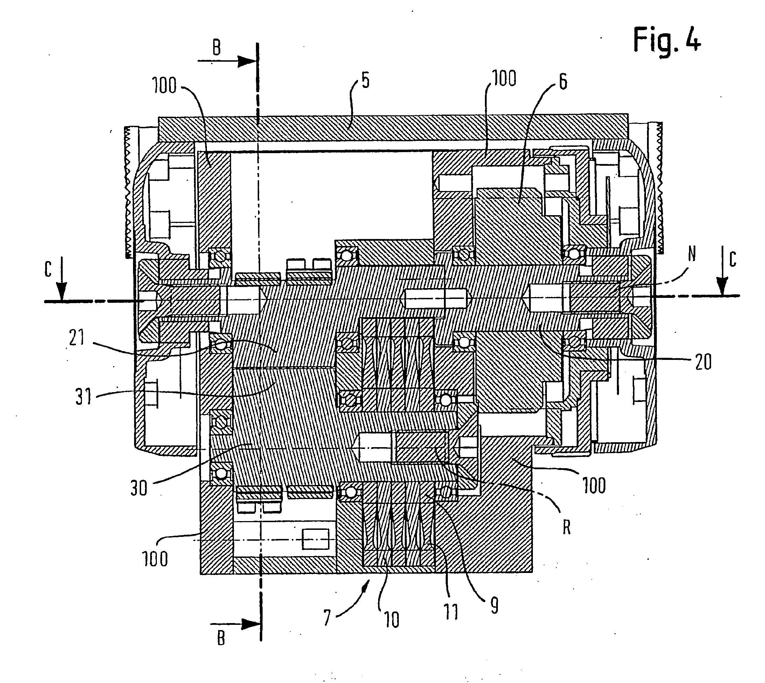

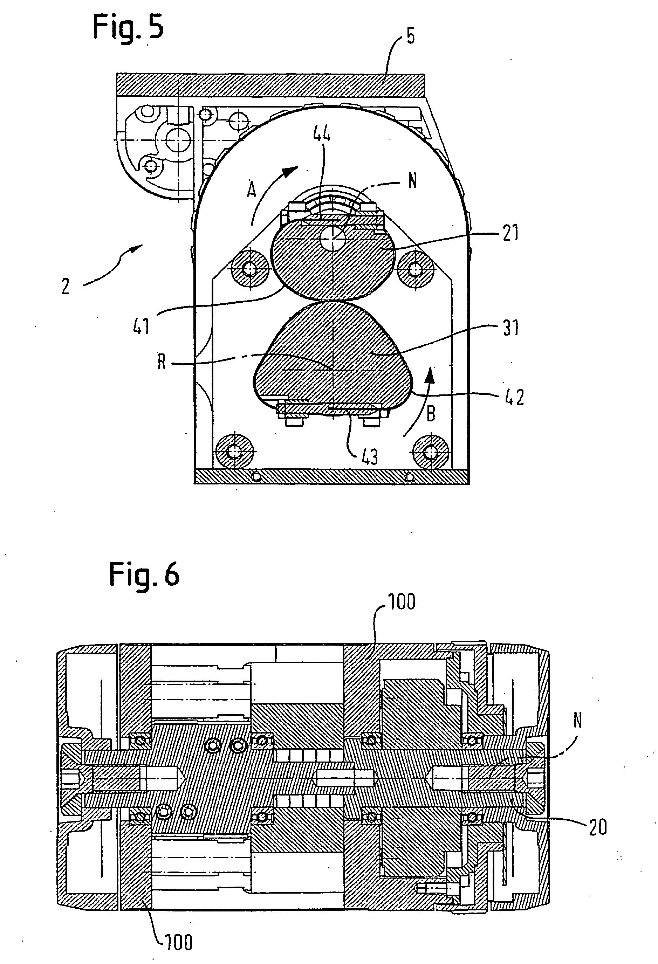

Aus der Zusammenschau der Figuren 4 und 5 wird deutlich, dass der erfindungsgemäße Stativkopf einen Stator 100 aufweist sowie einen Rotor 20 und eine Welle 30, die beide relativ bezüglich des Stators drehbar gelagert sind, in der dargestellten Ausführungsform über Wälzlager.

Eine Aufnahme 5 ist an der Oberseite des Stativkopfs 2 zu erkennen, in der Bohrungen 4 ausgebildet sind (vgl. Fig. 3). An dieser Aufnahme 5 kann mittels der Bohrungen 4 beispielsweise eine Kamera-Halteplatte (nicht dargestellt) oben auf dem Stativkopf 2 befestigt werden, auf der dann, vorzugsweise verschiebbar, eine Kamera (ebenfalls nicht dargestellt) angebracht werden kann.

Der Rotor 20 ist dabei mit der Aufnahme 5 für die Kamera fest gekoppelt, und bei einer Neigung der Kamera um die Neigeachse N führt der Rotor 20 bezüglich des Stators 100 eine Drehung um die Neigeachse N aus.

Wie sich insbesondere aus der Schnittansicht in Fig. 4 ergibt, ist in dem erfindungsgemäßen Stativkopf 2 eine Einrichtung 6 zum Dämpfen dieser Neigebewegung, d.h. dieser Drehung des Rotors 20 bezüglich des Stators 100, vorgesehen. Auf die Ausgestaltung dieser reibungsfreien Dämpfungseinrichtung 6 soll hier nicht näher eingegangen werden; es kann sich um jede der auf diesem Gebiet bekannten, geeigneten Dämpfungseinrichtungen handeln.

Der erfindungsgemäße Stativkopf 2 weist darüber hinaus eine Einrichtung 7 für den Gewichtsausgleich auf. Diese Ausgleichseinrichtung 7 kompensiert das beim der Neigebewegung des Rotors 20 beispielsweise durch das Gewicht einer Kamera entstehende Neigemoment und ermöglicht so ein kraftfreies Neigen dieser Kamera.

Der Energiespeicher 7, der in der Schnittansicht in Fig. 4 zu sehen ist, entspricht hinsichtlich seiner Struktur im wesentlichen dem eingangs beschriebenen, bekannten Energiespeicher. Er ist aber innerhalb des erfindungsgemäßen Stativkopfs 2 auf andere Art und Weise angeordnet, um das erzeugte Rückstellmoment exakter an das Neigemoment anzupassen, wie im folgenden noch genauer beschrieben wird.

Der Energiespeicher 7 weist mehrere Scheibentorsionsfedern 8 mit jeweils einem Innenring 9 und einem Außenring 10 auf. Die Innenringe 9 sind auf die Welle 30 aufgeschoben und dort auf an sich bekannte Art und Weise arretiert. Dazu können sie beispielsweise jeweils eine Nase aufweisen, die in eine entsprechend geformte Nut in der Welle 30 eingreift und den Innenring gegenüber dieser drehfest verriegelt.

Die Außenringe 10 sind mit dem Stator 100 einzeln lösbar koppelbar. Dazu kann jeder Außenring 10 an seiner äußeren Oberfläche z.B. eine Vertiefung aufweisen, über die der Außenring 10 mittels eines Riegelelements mit dem Stator 100 verbunden werden kann. Zwischen den Außenringen 10 und dem Stator 100 verbleibt dabei ein kleiner Spalt, so dass die Außenringe 10 gegen den Stator 100 verdreht werden können, wenn die Verriegelung nicht aktiv ist. Jede Scheibentorsionsfeder 8 kann unabhängig von den anderen mit dem Stator 100 verriegelt werden.

Zwischen Innenring 9 und Außenring 10 jeder Scheibentorsionsfeder 8 ist ein Federelement 11, in diesem Fall ein Gummiring, vorgesehen. Die Verbindung des Gummirings 11 mit dem Innen- und dem Außenring erfolgt beispielsweise während der Vulkanisierung durch chemische oder physikalische Vorgänge. Derartige Techniken zur Verbindung von Metall und Gummi bzw. anderen elastischen Materialien sind in der Technik bekannt.

Der Rotor 20 und die Welle 30 sind erfindungsgemäß so miteinander gekoppelt, dass die eben erwähnte Drehung des Rotors 20 bei einer Neigung der Kamera um die Neigeachse N auch eine Drehung der Welle 30 um ihre Achse R bewirkt.

Diese Kopplung ist hier dadurch realisiert, dass an dem Rotor 20 und der Welle 30 jeweils ein Abwälzbereich 21 bzw. 31 ausgebildet ist; diese beiden Abwälzbereiche 21, 31 bilden ein Abwälzgetriebe. Allerdings laufen die Abwälzbereiche 21, 31 bei einer Drehung des Rotors 20 um die Neigeachse N in dieser Ausführungsform nicht direkt aufeinander ab und bewirken so die Drehung der Welle 30 um seine Achse R, obwohl dies auch möglich wäre. Zur Übertragung der Drehbewegung vom Rotor 20 auf die Welle 30 sind vielmehr zwei Bänder oder Riemen vorgesehen, hier in Form von Stahlbändern 41, 42 (vgl. Fig. 5). Das erste Stahlband 41 verläuft von einem Befestigungspunkt 44 oben am Rotor 20 in Form eines S um den Rotor 20 und die Welle 30 herum bis zu einem Befestigungspunkt 43 unten an der Welle 30. Das zweite Stahlband 42 verläuft, um seine Breite parallel zur Zeichenebene versetzt, von dem Befestigungspunkt 44 oben am Rotor 30 auf dem spiegelverkehrten Weg, d.h. in Form eines Fragezeichens, um den Rotor 20 und die Welle 30 herum bis zu dem Befestigungspunkt 43 unten an der Welle 30.

Die beiden Stahlbänder 41, 42 bilden zusammen mit den Abwälzbereichen 21, 31 ein stoffschlüssiges Abwälzgetriebe, das sich im Grunde wie ein Zahnradgetriebe mit unendlich feiner Verzahnung verhält.

Die Stahlbänder 41, 42 haben im Idealfall keinerlei freie Seillänge. Die Stahlbänder 41, 42 sind so gegeneinander verspannt, dass die gesamte Anordnung spielfrei ist. Der Spalt zwischen den Abwälzbereichen 21, 31 des Rotors 20 und der Welle 30 bleibt während der Drehung stets konstant.

Mittels des erfindungsgemäßen Stativkopfs 2 wird das bei der Neigung der Kamera entstehende Neigemoment wie folgt kompensiert:

Zumindest einige der Außenringe 10 der Scheibentorsionsfedern 8 sind bezüglich des Stators arretiert. Wird nun die Aufnahme 5 zusammen mit dem Rotor 20 für eine Neigung der Kamera nach rechts in Fig. 5 verdreht (Pfeil A), bewirken die Stahlbänder 41, 42 eine Drehung der Welle 30 um ihre Achse R, und zwar in der entgegengesetzten Drehrichtung (Pfeil B). Dadurch werden die auf die Welle 30 aufgeschobenen Innenringe 9 der Scheibentorsionsfedern 8 gegenüber den im Stator 100 arretierten Außenringen 10 verwunden.

Das bei 44 am Rotor 20 befestigte erste Stahlband 41 bewirkt hier die Übertragung der Drehbewegung vom Rotor 20 auf die Welle 30, indem es über seine Befestigung bei 43 an der Welle 30 "zieht". Das zweite Stahlband 42 spielt dagegen bei dieser Neigerichtung keine Rolle.

Durch die Verwindung der Scheibentorsionsfedern 8 aufgrund ihrer Kopplung mit der Welle 30, auf die die Drehbewegung des Rotors 20 über das Abwälzgetriebe 21, 31 übertragen wird, wird das Neigemoment deutlich exakter kompensiert als bei der herkömmlichen Anordnung mit nur einem Rotor und zwischen diesem Rotor und dem Stator angeordneten Scheibentorsionsfedern, bei der die Drehung des Rotors direkt, d.h. 1:1, auf den Energiespeicher übertragen wird.

Durch Berechnung einer geeigneten Querschnittsgestalt der Abwälzbereiche 21, 31 des Rotors 20 und der Welle 30 kann das erzeugte Kompensationsmoment so optimiert werden, dass es im wesentlichen der sinusförmigen Idealkennlinie entspricht. Dann wird das tatsächlich auftretende Neigemoment in jeder Neigeposition exakt kompensiert. Die Vorteile der Verwendung von Scheibentorsionsfedern (gutes Leistungsgewicht, guter Leistungsraumverbrauch) bleiben erhalten.

Die erfindungsgemäße Anordnung ermöglicht ebenso eine Neigung der Kamera in der entgegengesetzten Richtung: Wird die Aufnahme 5 zusammen mit dem Rotor 20 für eine Neigung der Kamera nach links in Fig. 5 verdreht (entgegen Pfeil A), bewirkt das bei 44 am Rotor 20 befestigte zweite Stahlband 42 die Übertragung der Drehbewegung vom Rotor 20 auf die Welle 30, indem es über seine Befestigung bei 43 an der Welle 30 "zieht". Das erste Stahlband 41 spielt dagegen bei dieser Neigerichtung keine Rolle.

Auch in der umgekehrten Neigerichtung wird durch die Verwindung der Scheibentorsionsfedern 8 aufgrund ihrer Kopplung mit der Welle 30, auf die die Drehbewegung des Rotors 20 über das Abwälzgetriebe 21, 31 übertragen wird, das Neigemoment deutlich exakter kompensiert als bei der herkömmlichen Anordnung mit nur einem Rotor und zwischen diesem Rotor und dem Stator angeordneten Scheibentorsionsfedern, bei der die Drehung des Rotors direkt, d.h. 1:1, auf den Energiespeicher übertragen wird.

In der eben beschriebenen Ausführungsform sind die Außenringe 10 der Scheibentorsionsfedern 8 bezüglich des Stators arretierbar; es ist jedoch auch denkbar, sie so anzuordnen, dass sie bei einer Neigebewegung des Rotors ebenfalls ausgelenkt werden und so eine zusätzliche oder eine verminderte Verwindung der Scheibentorsionsfedern bewirkt wird.

Schließlich verläuft in der dargestellten Ausführungsform die Achse R der Welle 30 parallel zur Neigeachse N, aber versetzt zu dieser. Es ist jedoch auch möglich, eine konzentrische Anordnung vorzusehen.

Mit der erfindungsgemäßen Gewichtsausgleichseinrichtung können durch entsprechende Auswahl und Kombination der von den einzelnen Scheibentorsionsfedern gelieferten Rückstellmomente Schwenkmomente von Geräten, wie Film- oder Fernsehkameras unterschiedlichen Gewichts, über einen großen Bereich ausgeglichen werden, wobei das von der Ausgleichseinrichtung erzeugte Rückstellmoment innerhalb des gesamten Neigebereichs von mindestens ± 90° das Neigemoment exakter kompensiert als bei bisher bekannten Gewichtsausgleichseinrichtungen.

## Patentansprüche

1. Stativkopf (2) mit einem Stator (100) und einem bezüglich des Stators (100) um eine Neigeachse (N) herum drehbar gelagerten Rotor (20) sowie einer Ausgleichseinrichtung zum Ausgleichen eines bei einer Neigebewegung des Rotors (20) auftretenden Gewichtsmoments, die einen Energiespeicher (7) aufweist, der auf den Rotor (20) bei der Neigebewegung ein Rückstellmoment ausübt,
wobei die Ausgleichseinrichtung eine Zusatzeinrichtung (30, 21, 31) aufweist, die die Übertragung der Drehbewegung vom Rotor (20) auf den Energiespeicher (7) und so auch das mittels des Energiespeichers (7) auf den Rotor (20) ausgeübte Rückstellmoment beeinflusst und die eine ebenfalls bezüglich des Stators (100) um eine Achse (R) drehbar gelagerte Welle (30) sowie Mittel (21, 31) zum Übertragen der Drehbewegung des Rotors (20) auf die Welle (30) aufweist, so dass bei der Neigebewegung das mittels des Energiespeichers (7) auf den Rotor (20) ausgeübte Rückstellmoment durch die Drehung der Welle (30) um deren Achse (R) beeinflusst wird, **dadurch gekennzeichnet, daß** die Zusatzeinrichtung (30, 21, 31) ein Abwälzgetriebe (21, 31) aufweist, das durch einen Abwälzbereich (21) des Rotors (20) sowie einen Abwälzbereich (31) der Zusatzeinrichtung (30, 21, 31) gebildet ist, wobei die Gestalt des Querschnitts dieser Abwälzbereiche (21, 31) so optimiert ist, dass sich das Rückstellmoment im Wesentlichen sinusförmig mit dem Neigungswinkel verändert.

2. Stativkopf (2) nach einem der vorangehenden Ansprüche, bei welchem der Energiespeicher (7) zumindest einen mit dem Stator (100) verriegelbaren Außenring sowie zumindest einen dazu konzentrischen, mit der Zusatzeinrichtung (30, 21, 31) verriegelten Innenring (9) und zumindest ein dazwischen angeordnetes Federelement (11) aufweist.

3. Stativkopf (2) nach Anspruch 2, bei welchem das zumindest eine Federelement (11) eine Torsionsfeder ist.

4. Stativkopf (2) nach Anspruch 2, bei welchem das Federelement (11) zwischen Innenring (9) und Außenring (10) eine Spiralfeder ist.

5. Stativkopf (2) nach Anspruch 3, bei welchem das Federelement (11) zwischen Innenring (9) und Außenring (10) ein Gummiring ist.

6. Stativkopf (2) nach einem der vorangehenden Ansprüche, bei welchem der Energiespeicher (7) in mehrere voneinander unabhängige Einheiten (8) aufgeteilt ist, die wählbar einzeln oder in Kombination miteinander in Wirkverbindung zwischen Stator (100) und Zusatzeinrichtung (30, 21, 31) einschaltbar sind.

7. Stativkopf (2) nach einem der Ansprüche 1 bis 6, bei welchem die Zusatzeinrichtung (30, 21, 31) zum Übertragen der Drehung des Rotors (20) auf die Welle (30) ein Untersetzungs- und/oder Übersetzungsgetriebe (21, 31) aufweist.

8. Stativkopf (2) nach einem der vorangehenden Ansprüche, bei welchem zum Übertragen der Drehung des Rotors (20) auf die Zusatzeinrichtung (30, 21, 31) zumindest ein Band (41, 42) vorgesehen ist, das an einem Ende an dem Rotor (20) und am anderen Ende an der Zusatzeinrichtung (30, 21, 31) angebracht ist (bei 43, 44) und um zumindest einen Bereich des Rotors (20) und der Zusatzeinrichtung (30, 21, 31) herum verläuft.

9. Stativkopf (2) nach Anspruch 8, bei welchem das zumindest eine Band (41, 42) in Kombination mit dem Abwälzgetriebe (21, 31) zum Übertragen der Drehung des Rotors (20) auf die Zusatzeinrichtung (30, 21, 31) vorgesehen ist.

10. Stativkopf (2) nach einem der Ansprüche 8 und 9, bei welchem zwei Bänder (41, 42) zum übertragen der Drehung des Rotors (20) auf die Zusatzeinrichtung (30, 21, 31) in jeweils einer Neigerichtung vorgesehen sind.

11. Stativkopf (2) nach einem der vorangehenden Ansprüche, bei welchem außerdem eine Einrichtung (6) zum Dämpfen der Neigebewegung vorhanden ist.

## Claims

1. Tripod head (2) with a stator (100) and a rotor (20) positioned rotatably about a tilting pin (N) in respect of the stator (100) and a compensating device for compensating a weight moment occurring during a tilting movement of the rotor (20) and which has an energy store (7) which exerts a restoring moment on the rotor (20) during the tilting movement,
wherein the compensating device has a supplementary device (30, 21, 31) which influences the transmission of the rotary movement from the rotor (20) to the energy store (7) and therefore also the restoring moment exerted on the rotor (20) by means of the energy store (7) and which has a shaft (30) likewise positioned rotatably about an axis (R) in relation to the stator (100) and means (21, 31) for transmitting the rotary movement of the rotor (20) to the shaft (30), so that during the tilting movement the restoring moment exerted on the rotor (20) by means of the energy store (7) is influenced by the rotation of the shaft (30) about its axis (R), **characterised in that** the supplementary device (30, 21, 31) has involute gears (21, 31), formed by an involute area (21) of the rotor (20) and an involute area (31) of the supplementary device (30, 21, 31), the shape of the cross-section of these involute areas (21, 31) being optimised in such a way that the restoring moment changes substantially sinusoidally with the angle of inclination.

2. Tripod head (2) according to one of the preceding claims, in which the energy store (7) has at least one outer ring which can be locked to the stator (100) and at least one inner ring (9), concentric thereto and locked to the supplementary device (30, 21, 31), and at least one spring element (11) arranged in between.

3. Tripod head according to claim 2, in which the at least one spring element (11) is a torsion spring.

4. Tripod head (2) according to claim 2, in which the spring element (11) between the inner ring (9) and the outer ring (10) is a flat spiral spring.

5. Tripod head (2) according to claim 3, in which the spring element (11) between the inner ring (9) and the outer ring (10) is a rubber spring.

6. Tripod head (2) according to one of the preceding claims, in which the energy store (7) is divided into several mutually independent units (8), which can be optionally switched individually or in combination with one another into active connection between the stator (100) and the supplementary device (30, 21, 31).

7. Tripod head (2) according to one of claims 1 to 6, in which the supplementary device (30, 21, 31) has step-down and/or step-up gears (21, 31) for transmitting the rotation of the rotor (20) to the shaft (30).

8. Tripod head (2) according to one of the preceding claims, in which at least one belt (41, 42) is provided, which is attached at one end to the rotor (20) and at the other end to the supplementary device (30, 21, 31) (at 43, 44) and runs round at least one area of the rotor (20) and the supplementary device (30, 21, 31), to transmit the rotation of the rotor (20) to the supplementary device (30, 21, 31).

9. Tripod head (2) according to claim 8, in which the at least one belt (41, 42) is provided in combination with the involute gears (21, 31) to transmit the rotation of the rotor (20) to the supplementary device (30, 21, 31).

10. Tripod head (2) according to one of claims 8 and 9, in which two belts (41, 42) are provided to transmit the rotation of the rotor (20) to the supplementary device (30, 21, 31) in one direction of inclination in each case.

11. Tripod head (2) according to one of the preceding claims, in which there is additionally a device (6) for damping the tilting movement.

## Revendications

1. Tête de trépied (2), avec un stator (100) et un rotor (20) monté à rotation par rapport au stator (100), la rotation se faisant autour d'un axe d'inclinaison (N), ainsi qu'avec un dispositif d'équilibrage, pour équilibrer un couple dû au poids, se produisant lors d'un déplacement d'inclinaison du rotor (20), dispositif d'équilibrage présentant un accumulateur d'énergie (7) exerçant un couple de rappel sur le rotor (20) lors du déplacement d'inclinaison,
le dispositif d'équilibrage présentant un dispositif additionnel (30, 21, 31), qui influe sur la transmission du couple de rotation du rotor (20) à l'accumulateur d'énergie (7) et, ainsi, également sur le couple de rappel exercé sur le rotor (20) au moyen de l'accumulateur d'énergie (7), et qui présente un arbre (30), également monté à rotation par rapport au stator (100), autour d'un axe (R), ainsi que des moyens (21, 31) pour transmettre le mouvement rotatif du rotor (20) à l'arbre (30), de manière que, lors du déplacement d'inclinaison, le couple de rappel exercé sur le rotor (20) au moyen de l'accumulateur d'énergie (7) soit influencé par la rotation de l'arbre (30) autour de son axe (R), **caractérisée en ce que** le dispositif additionnel (30, 21, 31) présente une transmission à déroulement (21, 31) formée par une zone de déroulement (21) du rotor (20) ainsi qu'une zone de déroulement (31) du dispositif additionnel (30, 21, 31), la forme de la section transversale de ces zones de déroulement (21, 31) étant optimisée, de manière que le couple de rappel varie de façon sensiblement sinusoïdale avec l'angle d'inclinaison.

2. Tête de trépied (2) selon l'une des revendications précédentes, pour laquelle l'accumulateur d'énergie (7) présente au moins une bague extérieure verrouillable au stator (100) ainsi qu'au moins une bague intérieure (9), concentrique à celle-ci et verrouillée au dispositif additionnel (30, 21, 31), et présente au moins un élément élastique (11) en position intermédiaire.

3. Tête de trépied (2) selon la revendication 2, pour laquelle le au moins un élément élastique (11) est un ressort de torsion.

4. Tête de trépied (2) selon la revendication 2, pour laquelle l'élément élastique (11) entre la bague intérieure (9) et la bague extérieure (10) est un ressort spiral.

5. Tête de trépied (2) selon la revendication 3, pour laquelle l'élément élastique (11), entre la bague intérieure (9) et la bague extérieure (10), est une bague en caoutchouc.

6. Tête de trépied (2) selon l'une des revendications précédentes, pour laquelle accumulateur d'énergie (7) est subdivisé en plusieurs unités (8) indépendantes les unes des autres, qui peuvent être mises en service, au choix individuellement ou en combinaison entre elles, en liaison fonctionnelle entre le stator (100) et le dispositif additionnel (30, 21, 31).

7. Tête de trépied (2) selon l'une des revendications 1 à 6, pour laquelle le dispositif additionnel (30, 21, 31) présente une transmission réductrice et/ou multiplicatrice (21, 31), pour transmettre la rotation du rotor (20) à l'arbre (30).

8. Tête de trépied (2) selon l'une des revendications précédentes, pour laquelle, pour transmettre la rotation du rotor (20) au dispositif additionnel (30, 21, 31), au moins une bande (41, 42) est prévue, montée (en 43, 44) à une extrémité sur le rotor (20) et à l'autre extrémité sur le dispositif additionnel (30, 21, 31) et s'étendant autour d'au moins une zone du rotor (20) et du dispositif additionnel (30, 21, 31).

9. Tête de trépied (2) selon la revendication 8, pour laquelle la au moins une bande (41, 42), en combinaison avec la transmission à déroulement (21, 31), est prévue pour transmettre la rotation du rotor (20) au dispositif additionnel (30, 21, 31).

10. Tête de trépied (2) selon l'une des revendications 8 et 9, pour laquelle deux bandes (41, 42) sont prévues pour transmettre la rotation du rotor (20) au dispositif additionnel (30, 21, 31) dans chaque fois une direction d'inclinaison.

11. Tête de trépied (2) selon l'une quelconque des revendications précédentes, pour laquelle, en outre, un dispositif (6) est prévu pour amortir le mouvement d'inclinaison.
